**Europäisches Patentamt**

**European Patent Office**

**Office européen des brevets**

(19)

(11) Veröffentlichungsnummer: **0 113 031**
**B1**

(12)                        EUROPÄISCHE PATENTSCHRIFT

(45) Veröffentlichungstag der Patentschrift:
**11.05.88**

(51) Int. Cl.⁴: **G 01 N 29/00**, G 01 H 13/00 //
**G01N9/24**

(21) Anmeldenummer: **83111752.8**

(22) Anmeldetag: **24.11.83**

(54) **Vorrichtung zur Echtheitsprüfung von Edelmetallformkörpern.**

(30) Priorität: **03.12.82 DE 3244717**

(43) Veröffentlichungstag der Anmeldung:
**11.07.84 Patentblatt 84/28**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**AT - B - 200 364**
**CH - A - 553 456**
**DE - A - 2 628 178**
**GB - A - 1 011 472**
**GB - A - 2 000 591**

**Dtv-lexikon der Physik, Bd. 7, Seiten 80-83**

(73) Patentinhaber: **Degussa Aktiengesellschaft,**
**Weissfrauenstrasse 9, D-6000 Frankfurt am Main 1 (DE)**

(72) Erfinder: **Preisser, Friedrich, Dr. Dipl.-Phys., Hardecker**
**Strasse 9, D-6470 Büdingen (DE)**
Erfinder: **Gafner, Geoffrey, Dr., 5 Holland Street,**
**2001 Johannesburg (ZA)**

## Beschreibung

Die Erfindung betrifft eine Vorrichtung zur Echtheitsprüfung von Edelmetallformkörpern, insbesondere von Edelmetallbarren und Edelmetallronden, durch Anregung der Edelmetallformkörper über einen Schwingungsgeber mit Transversalschwingungen und Messung der Resonanzfrequenz mit Hilfe eines Schwingungsaufnehmers. Bevorzugt sollen hiermit Goldbarren und Goldmünzen auf ihre Echtheit geprüft werden, jedoch ist die Vorrichtung auch auf Formkörper aus anderen Edelmetallen anwendbar, wie Silber oder Platinmetalle.

Immer wieder werden Fälschungen von Goldbarren und Goldmünzen entdeckt, die entweder ganz aus unedleren Metallen bestehen oder bei denen ein Kern aus Unedelmetallen, insbesondere Blei oder Wolfram, nur mit einer dünnen Edelmetallschicht bedeckt ist. Solche Fälschungen bedeuten einen erheblichen materiallen Schaden und vermindern gleichzeitig das Vertrauen in Gold bzw. andere Edelmetalle als sichere Wertanlage.

Es gibt daher Geräte, mit denen man beispielsweise bei Banken oder Juwelieren die Echtheit von Formkörpern bestimmter Abmessungen bestimmen kann und deren Messprinzip auf Methoden der zerstörungsfreien Materialprüfung beruht. Zur Materialidentifikation werden in der Praxis bisher Ultraschall- und Wirbelstromgeräte verwendet. Zur Ankoppelung des Ultraschallmesskopfes an den Prüfling muss bei den Ultraschallgeräten jedoch eine ölige Übertragungsflüssigkeit auf das Prüfobjekt aufgebracht werden, was kein sauberes Arbeiten gestattet. Ausserdem analysiert der Messkopf wegen seiner geringen Abmessungen normalerweise nur einen Teil des Prüflings. Ebenso messen Wirbelstromgeräte wegen der begrenzten Eindringtiefe von Hochfrequenz keine grösseren Probenvolumina aus. Auch Prüfgeräte, die die Wärmeleitfähigkeit des Prüflings bestimmen, sind nur begrenzt anwendbar, da bei diesem Messprinzip extreme Anforderungen an die Toleranzen der Prüflingsabmessungen gestellt sind, so dass nur spezielle Goldbarrentypen hiermit überprüft werden können.

Aus der CH-PS 553 456 ist eine Vorrichtung zum Nachweis von gefälschten Münzen bekannt, bei der die Münze über einen Lautsprecher mit mechanischen Transversalwellen beaufschlagt wird und die Resonanzfrequenz der Münze mit einem Mikrophon bestimmt wird. Diese Vorrichtung hat aber den Nachteil, dass sie nur für Münzen geeignet ist und durch die notwendigen Zusatzgeräte aufwendig und voluminös gebaut ist. Ausserdem arbeitet sie nicht sehr genau.

Das gleiche gilt von einer Vorrichtung, wie sie in der GB-PS 1 011 472 beschrieben ist. Dort werden die Prüfkörper mit Längsschwingungen beaufschlagt, wobei zwischen Prüfkörper und Schwingungsgeber bzw. Schwingungsdetektor jeweils ein Luftspalt ausgebildet sein muss.

Es war daher Aufgabe der vorliegenden Erfindung, eine Vorrichtung zur Echtheitsprüfung von Edelmetallformkörpern zu finden, insbesondere für Edelmetallbarren und Edelmetallronden, durch Anregung der Edelmetallformkörper über einen Schwingungsgeber mit Transversalschwingungen und Messung der Resonanzfrequenz mit Hilfe eines Schwingungsaufnehmers, die universell anwendbar ist, alle Formkörper prüfen kann, ein sauberes Arbeiten gestattet und einfach und handlich aufgebaut ist. Insbesondere sollten Fälschungen auf Wolframbasis mit Goldüberzug leicht erkennbar sein.

Diese Aufgabe wurde erfindungsgemäss dadurch gelöst, dass Schwingungsgeber und Schwingungsaufnehmer als piezoelektrische Wandler ausgebildet und direkt an den Prüfkörper angekoppelt sind und eine oder mehrere Auflagen für den Prüfkörper vorhanden sind.

Mit dieser Vorrichtung können Prüflinge unterschiedlicher Abmessungen zerstörungsfrei und ohne Prüfrückstände über ihr gesamtes Volumen auf ihre Zusammensetzung untersucht werden. Jeder elastische Körper kann zu charakteristischen Schwingungen angeregt werden, wobei die Schwingungsformen auf Grundschwingung und Oberschwingungen beschränkt sind. Für eine vorgegebene Aufhängungsart bzw. Lagerung der Formkörper hängen diese Schwingungsfrequenzen von den Abmessungen, dem Elastizitätsmodul $E$ und der Dichte $\rho$ des Prüflings ab. Liegen z.B. stabförmige Körper auf zwei Schneiden auf, so können sie transversale Biegeschwingungen ausführen, falls sie durch eine äussere Kraft aus ihrer Ruhelage ausgelenkt werden. Die Frequenz der Grundschwingung eines Stabes ist nach bekannten Gleichungen abhängig von der Dicke und Länge des Stabes, dem Elastizitätsmodul seines Werkstoffs und der Dichte des Werkstoffs. Wirkt die äussere Kraft mit z.B. der Grundfrequenz auf den Körper ein, so schwingt der Körper in Resonanz, d.h. mit maximalen Schwingungsamplituden. Legt man verschiedene Schwingungen an den Körper an, lässt sich die Resonanzfrequenz bestimmen, die bei bekannten Abmessungen eine charakteristische Grösse für den Werkstoff des Formkörpers ist und zu dessen Identifizierung herangezogen werden kann.

Barren bzw. Ronden werden vorzugsweise auf eine aus elastischem Material bestehende, ebene Platte, oder auf zwei Schneiden bzw. drei Auflagepunkten gelagert und mit einem piezoelektrischen Wandler, dessen Frequenz kontinuierlich veränderlich ist, zu Transversalschwingungen angeregt. Die Ankoppelung kann über einen dünnen Draht mit einem Durchmesser von rund 1 mm erfolgen, der leicht an den Prüfling angedrückt wird bzw. an der der Prüfling leicht angedrückt wird. Die Schwingungsamplitude wird ebenfalls mit einem piezoelektrischen Wandler abgenommen. Ihr Maximalwert gibt die Resonanzfrequenz an, aus der bei bekannten Abmessungen das Verhältnis Elastizitätsmodul/Dichte abgelesen werden kann.

Da die Resonanzfrequenz für z.B. jeden Typ eines Feingoldbarrens charakteristisch ist, kann das Messergebnis mit einem Tabellenwert verglichen werden. Fälschungen sind leicht erkennbar, da es kein Material bzw. Materialkombination gibt, die die Resonanzfrequenz von Feingold besitzt. Insbesondere ist es möglich, Wolframeinschlüsse in Gold zu identifizieren, die zwar gleiche Dichte besitzen, aber im Elastizitätsmodul um den Faktor 5 sich unterscheiden.

Zur Prüfung der Edelmetallformkörper verwendet man vorzugsweise Vorrichtungen, bei denen die Auflage als horizontale, aus einem elastischen Material bestehende, ebene Platte ausgebildet ist. Diese elastische Platte muss grösser sein als der mögliche Prüfkörper, der auf die Platte aufgelegt und leicht gegen einen nadelförmigen Schwingungsgeber angedrückt wird, der am Rand dieser Platte angebracht ist. Für die elastische Platte verwendet man Werkstoffe, die Schwingungsauslenkungen der Prüfkörper, die in der Grössenordnung von einigen Mikrometern liegen können, ohne wesentliche Behinderung zulassen. Als geeignet haben sich Filz, Kork, Samt, Velourstoffe, Gummi und geschäumte Kunststoffe erwiesen. Besonders bewährt hat sich grobporiges, geschäumtes Polyäthylen mit sehr geringen Schwingungsdämpfungswerten. Die Dicke der elastischen Auflageplatte ist nicht entscheidend, sie sollte jedoch grösser als 1 mm sein.

Auf dieser elastischen Auflage können Prüfkörper beliebiger Form und beliebigen Gewichts geprüft werden, also auch jede Art von Edelmetallbarren und Edelmetallmünzen.

Zur Prüfung werden im Gerät elektronische Signale erzeugt bzw. verarbeitet. Es gibt zwei Ausführungsformen in der elektronischen Gerätefunktion: Erzeugung der zu beaufschlagenden Schwingungen durch den Probekörper selbst oder durch einen geräteinternen Frequenzgeber.

Wie in einem elektrischen Schwingkreis, kann mit einem schwingenden Probekörper ein schwingendes System aufgebaut werden, dessen frequenzbestimmendes Element die Resonanzfrequenzen des Probekörpers sind. Dazu muss die Gesamtverstärkung grösser als 1 und die Phasenverschiebung gleich 0 sein. Man erreicht dies, indem das Signal des piezoelektrischen Schwingungsaufnehmers verstärkt (ggf. in der Phase verschoben) und dem piezoelektrischen Schwingungsgeber zugeführt wird. Dieser Schwingkreis oszilliert mit einer Resonanzfrequenz des Probekörpers (Selbsterregung).

Vorteile der Selbsterregermessschaltung sind der einfache, kostengünstige elektronische Aufbau. Die Prüfung mit Selbsterregung erfordert jedoch gewisse Vorkenntnisse des Bedienungspersonals, da sich in Abhängigkeit vom Ort, an dem der Schwingungsaufnehmer auf den Probekörper aufgesetzt wird, neben der Grundschwingung auch Oberschwingungen ausbilden können. An demselben Probekörper kann dann eine diskrete Folge von Resonanzfrequenzen gemessen werden, die die Interpretation des Messergebnisses für Laien erschwert.

Es ist daher meist vorteilhaft, die zur Beaufschlagung der Probekörper notwendigen Frequenzen geräteintern von einem Oszillator zu erzeugen, der beliebige Frequenzen generieren kann. Das Oszillatorsignal wird durch den piezoelektrischen Schwingungsgeber auf den Probekörper übertragen. Mit dem Schwingungsaufnehmer wird Schwingungsfrequenz und Schwingungsamplitude gemessen und zur Anzeige gebracht. Da bei kontinuierlicher Variation der Frequenz des Oszillators nacheinander Grund- und Oberschwingungen in Resonanz angezeigt werden, ergeben sich auch hier die oben erwähnten Interpretationsprobleme für das Bedienungspersonal. Für eine einfache Handhabung ist es deshalb wünschenswert, jeweils nur eine Resonanzfrequenz eines gegebenen Prüflings einzuspeichern. Dies erreicht man dadurch, dass der Oszillator bestimmte charakteristische Frequenzen abgibt, die auf charakteristische Prüfkörper (Hersteller, Art, Grösse usw.) eingestellt und abrufbar sind. Dadurch lassen sich die Vorrichtungen bedienungsfreundlicher gestalten.

Zur Prüfung von Edelmetallbarren, insbesondere Goldbarren, kann man auch Vorrichtungen verwenden, bei denen die Auflagen für den Prüfling als Schneiden ausgebildet sind, die mittels einer Spindel symmetrisch zur Prüflingsmitte in ihrer Lage verändert werden können. Zur Zentrierung des Prüflings sind zwei Anschläge ebenfalls auf einer Spindel befestigt, wobei an einem der Anschläge der Schwingungsgeber angebracht ist und über der Prüflingsmitte an einem beweglichen Hebelarm ein Schwingungsaufnehmer sich befindet. Vorzugsweise bestehen die Schneiden und die Anschläge aus Polyacrylaten.

Zur Echtheitsprüfung von Münzronden aus Edelmetall sind auch Vorrichtungen anwendbar, bei denen der Prüfling auf drei radial verschiebbaren, als Kegel ausgebildeten Auflagen aufliegt und der Schwingungsgeber und der Schwingungsaufnehmer sich gemeinsam nebeneinander auf einem beweglichen Hebelarm über der Prüfungsmitte befinden. Die Messung der Resonanzfrequenz erfolgt dabei im Schwingungsbauch der sich ausbildenden Schwingung, der sich im Zentrum oder am Rand der Ronde befindet. Die Zentrierung der Ronde ist nicht problematisch und kann nach Augenmass durchgeführt werden.

Die Abbildungen I bis IV zeigen schematisch einige beispielhafte Ausführungsformen von Vorrichtungen zur Echtheitsprüfung von Edelmetallformkörpern, wobei Abbildung I eine Vorrichtung mit ebener Auflageplatte, Abbildung II eine Vorrichtung mit zwei Schneiden als Auflagen und Abbildung III eine Vorrichtung mit drei Spitzen als Auflage wiedergibt. Aus Abbildung IV sind nähere Einzelheiten der radialen Auflageverschiebung zu entnehmen.

Eine für Barren, Ronden und sonstige Formkörper verwendbare Vorrichtung besteht aus einem Gehäuse (28), in das der Oszillator und die übrige Elektronik eingebaut ist. Die Auflage (2) zur Aufnahme des Prüfkörpers (1) ist als ebene Platte ausgebildet und besteht aus einem elastischen Material. Der Prüfkörper (1) wird gegen den Schwingungsgeber (10) leicht angedrückt, der am Rande der Auflage (2) angebracht ist und in den Luftraum oberhalb der Auflage (2) hineinragt. Die für handelsübliche Formkörper (Barren, Münzen) charakteristischen Resonanzfrequenzen können über eine Tastatur (29) dem Oszillator eingegeben werden. Der Schwingungsaufnehmer (11) wird aus seiner Halterung entnommen und auf die Mittel des Prüfkörpers (1) aufgesetzt. Mit einem Abstimmknopf (30) lässt sich der maximale Amplitudenwert der Frequenz, d.h. die Resonanzfrequenz, genau einstellen und auf einem Anzeigefenster (31) ablesen.

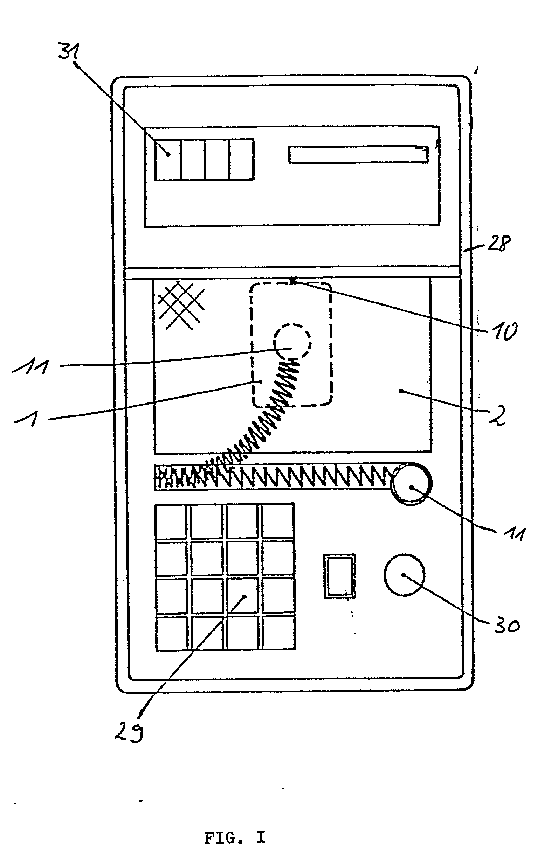

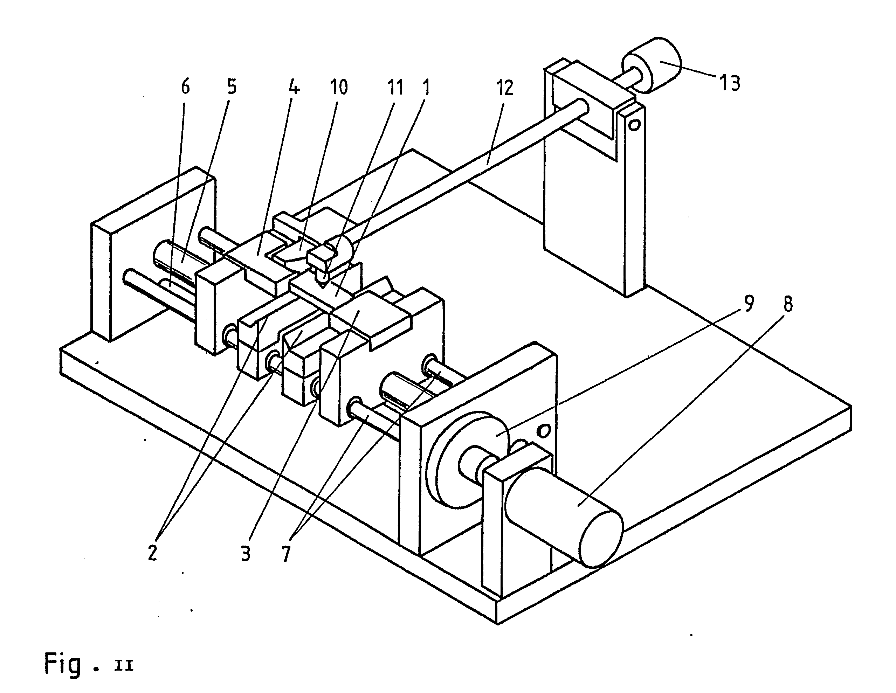

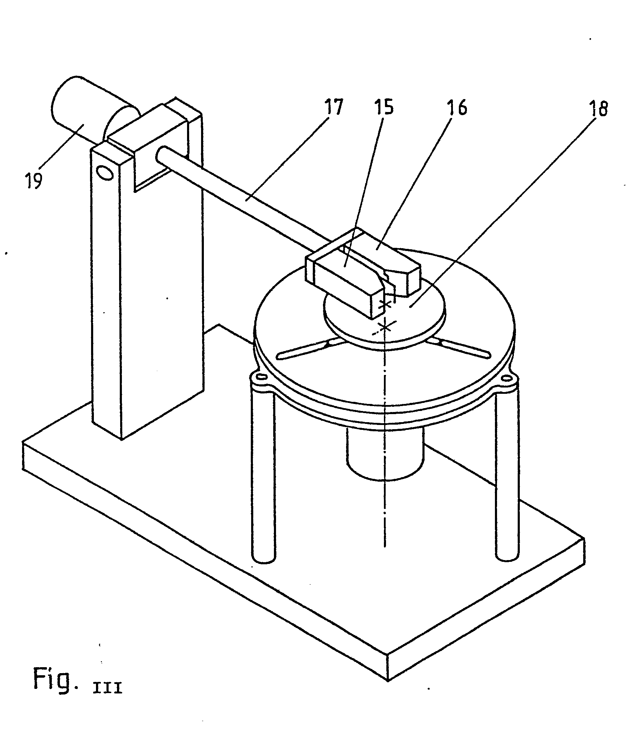

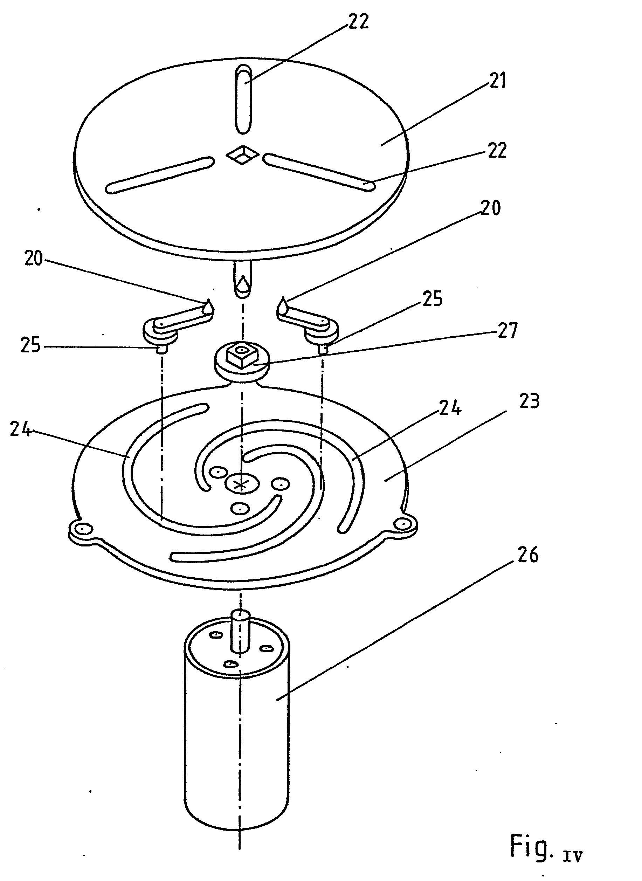

Anhand der Abbildung II wird eine Vorrichtung näher beschrieben, mit der Barren verschiedener Abmessungen geprüft werden können. Damit sich die Grundschwingung des freien Barrens bevorzugt ausbilden kann, muss der Barren in den zwei Knoten der stehenden Schwingung gelagert werden, die nach physikalischen Gesetzen jeweils einen Abstand von 0,22 mal Barrenlänge von der Mitte des Barrens besitzen. Dazu kann der Abstand der beiden Auflagen (2), die die Form von Schneiden besitzen, über eine Spindel (5) mit Links- und Rechtsgewinde symmetrisch zur Prüfungsmitte verändert werden. Die Auflagen (2) werden in Lagern auf zwei Führungsachsen (7) geführt. Zur Zentrierung des Prüflings (1) bezüglich der Mitte des Abstands zwischen den beiden Auflagen (2) dienen zwei Anschläge (3, 4), die durch eine weitere Spindel (6) ebenfalls symmetrisch beweglich sind. Beide Spindeln (5, 6) werden von einem Stellmotor (8) mit Untersetzunggetriebe (9) angetrieben. Die Gewindesteigungen beider Spindeln verhalten sich wie 1 : 1,27, so dass der Abstand zwischen Auflage (2) und Anschlag (3 bzw. 4) stets 0,22 × Barrenlänge ist. Die Anschläge (3, 4) dienen nicht zur Einspannung des Prüflings (1), sondern als Zentrierungshilfe beim Beschicken des Gerätes. Während des Messvorganges sind Prüfling (1) und Anschläge (3, 4) durch einen feinen Spalt getrennt, damit sich die Schwingung ungedämpft ausbildet. Dieser Spalt wird erzeugt, indem unmittelbar vor Beginn der Messung der Abstand beider Anschläge (3, 4) durch ein geringes Rückwärtsdrehen der Spindel (6) vergrössert wird. Die Auseinanderbewegung der Schneiden wird durch einen Freilauf auf der Gewindespindel (5) verhindert, der erst nach einer Rückwärtsdrehung des Getriebes um beispielsweise 120° anspricht.

Das Material, aus dem die Auflagen (2) und die Anschläge (3, 4) hergestellt sind, muss sich in seinem Schallwellenwiderstand des Prüflings unterscheiden, um die Übertragung von Schwingungsenergie des Barrens auf die Gerätestruktur möglichst gering zu halten. Für Goldbarren sind deshalb die Auflagen (2) und die Anschläge (3, 4) vorzugsweise aus Polyacrylglas gefertigt.

Die Schwingungserregung erfolgt seitlich an einem Barrenende durch einen Schwingungsgeber (10), der auf einem Anschlag (4) montiert ist. Als Schwingungsgeber sind piezoelektrische Wandler geeignet, die einen entsprechenden Frequenzbereich übertragen. In der bevorzugten Ausführungsform wird ein piezoelektrischer Tonabnehmer verwendet, wie er in der Phonotechnik zur Abtastung von Schallplatten eingesetzt wird. Nach Entarretierung eines Riegels wird der Tonabnehmer durch Federkraft um einen Drehpunkt horizontal in Richtung des Prüflings (1) bewegt, um den Tonkopf an den Barren anzukoppeln.

Die Schwingungsamplitude wird in der Barrenmitte bestimmt, indem ein Hebelarm (12) mit einem Schwingungsaufnehmer (11) auf den Prüfling (1) aufgelegt wird. Der Hebelarm (12) ist mit einem Ausgleichsgewicht (13) zur Einstellung der Auflagekraft versehen. Zur Schwingungsaufnahme ist jeder piezoelektrische Wandlertyp geeignet. Bevorzugt wird ein piezoelektrischer Beschleunigungsaufnehmer mit geringem Eigengewicht eingesetzt.

Der Prüfprozess beginnt mit der Eingabe des zu prüfenden Barrens in eine Eingabetastatur. Diese Eingabetastatur steuert den Stellmotor (8) so, dass der dem jeweiligen Barrentyp entsprechende Schneidenabstand eingestellt wird. Der Barren wird zwischen die Anschläge (3, 4) auf die Auflagen (2) aufgelegt, der Schwingungsgeber (10) durch Lösen der Arretierung angekoppelt und der Aufnehmer (11) auf den Barren aufgesetzt. Die Erregerfrequenz wird mit einem Frequenzgenerator in einem Intervall variiert und die Resonanzfrequenz bestimmt. Dieser Messwert wird mit dem Sollwert, der in der Eingabeeinheit für die entsprechenden Barrentypen gespeichert ist, verglichen. Auf diese Weise lässt sich jede Fälschung sofort erkennen.

An einem 100 g-Feingoldbarren wird die Funktionsfähigkeit dieses Prüfverfahrens demonstriert: es wird die Resonanzfrequenz 5,18 kHz gemessen. Barren gleicher Abmessungen, jedoch aus verschiedenen Metallen, sind durch eine abweichende Resonanzfrequenz zu identifizieren: f (Al) = 14,0 kHz, f (Cu) = 10,2 kHz, f (Pb) = 3,8 kHz, f (W) = 13,3 kHz. Gefälschte Feingoldbarren, die Einschlüsse aus Fremdmetallen enthalten, werden ebenfalls durch eine vom echten Barren abweichende Resonanzfrequenz erkannt.

Die Abbildungen III und IV zeigen schematisch eine Vorrichtung zur Echtheitsprüfung von Münzronden.

Schwingungserregung und Messung der Schwingungsamplitude erfolgen im Zentrum des Prüflings (1). Dazu werden Schwingungsgeber (15) und Schwingungsaufnehmer (16) an einem Hebelarm (17) nebeneinander auf den Prüfling (18) aufgelegt. Die Auflagekraft ist durch ein Gegengewicht (19) am Hebelarm (17) einstellbar. Es werden z.B. piezoelektrische Tonabnehmer als Schwingungsgeber und piezoelektrische Schwingungsaufnehmer zur Erfassung der Schwingungsamplitude verwendet.

Mit dieser Vorrichtumg lassen sich Münzronden unterschiedlicher Grösse auf ihre Echtheit prüfen. Dazu werden die Münzen horizontal auf drei kegelförmigen Auflagen (20) gelagert, die in einer scheibenförmigen Grundplatte (21) eingelassen sind. Die Grundplatte (21) enthält drei radialförmig angeordnete Langlöcher (22), die jeweils einen Winkel von 120° zueinander haben. Die Auflagen (20) können in diesen Langlöchern geführt in radialer Richtung bewegt werden. Zur Veränderung der Radialpositionen der Auflagen (4) befindet sich eine weitere Scheibe (23) zentriert unterhalb der Grundplatte (21). Diese Scheibe (23) enthält spiralförmige Langlöcher (24), die sich vom Zentrum der Scheibe (23) zu deren Rand hin erstrekken. In jedes dieser drei spiralförmigen Langlöcher (24) ragt eine stiftartige Verlängerung (25) der Auflagen (20) hinein. Mit einer Drehung von Grundplatte (21) und Scheibe (23) relativ zueinander können die Auflagen (20) synchron in radialer Richtung bewegt werden. Mit dieser konstruktiven Auslegung lassen sich Münzen unterschiedlicher Durchmesser jeweils im Schwingungsknoten lagern. In einer bevorzugten Ausführungsform ist die Scheibe (23) fixiert, und die Grundplatte (21) wird durch einen Schrittmotor (26) in die gewünschte Stellung gefahren. Der Schrittmotor (26) ist unterhalb beider Scheiben in Richtung der Drehachse montiert. Die Kraftübertragung erfolgt durch eine Vierkantmutter (27), die in die Grundplatte (21) einrastet.

Am Beispiel von Krugerrand-Goldmünzen wird die Funktionsfähigkeit des Echtheitsprüfgerätes demonstriert. Die Grundschwingungsfrequenz der echten Münzen ist 9,1 kHz. Wolframronden der gleichen Abmessungen haben Resonanzfrequenzen von 17,0 kHz. Werden Wolframronden mit einer Goldschicht von 200 um überzogen, sinkt ihre Resonanzfrequenz auf 16,1 kHz. Diese beschichtete Modifikation ist dem äusseren Anschein nach nicht von echten Goldronden zu unterscheiden, die Resonanzfrequenzen sind jedoch deutlich voneinander getrennt. Weitere Versuche mit Ronden aus verschiedenen Leicht- und Schwermetallen zeigen ebenfalls wesentliche Unterschiede der Eigenschwingungsfrequenzen. Damit ist demonstriert, dass die Resonanzfrequenzmethode trotz relativ geringen apparativen Aufwandes eine aussagekräftige Echtheitsprüfung ist.

## Patentansprüche

1. Vorrichtung zur Echtheitsprüfung von Edelmetallformkörpern, insbesondere von Edelmetallbarren und Edelmetallronden, durch Anregung des Edelmetallformkörpers über einen Schwingungsgeber mit Transversalschwingungen und Messung der Resonanzfrequenz mit Hilfe eines Schwingungsaufnehmers, dadurch gekennzeichnet, dass Schwingungsgeber (10) und Schwingungsaufnehmer (11) als piezoelektrische Wandler ausgebildet und direkt an den Prüfkörper (1) angekoppelt sind und eine oder mehrere Auflagen (2) für den Prüfkörper (1) vorhanden sind.

2. Vorrichtung zur Echtheitsprüfung nach Anspruch 1, dadurch gekennzeichnet, dass die Auflage (2) als horizontale, aus einem elastischen Material bestehende, ebene Platte ausgebildet ist.

3. Vorrichtung zur Echtheitsprüfung von Barren nach Anspruch 1, dadurch gekennzeichnet, dass die Auflagen (2) als zwei Schneiden ausgebildet sind, die mittels einer Spindel (5) symmetrisch zur Mitte des Prüflings (1) in ihrer Lage verändert werden können, zur Zentrierung des Prüflings (1) zwei Anschläge (3, 4) ebenfalls auf einer Spindel (6) befestigt sind, an einem der Anschläge (4) ein Schwingungsgeber (10) angebracht ist und über der Prüflingsmitte an einem beweglichen Hebelarm (12) der Schwingungs-Aufnehmer (11) sich befindet.

4. Vorrichtung zur Echtheitsprüfung von Ronden nach Anspruch 1, dadurch gekennzeichnet, dass die Auflagen aus drei radial verschiebbaren Kegeln (14) bestehen und Schwingungsgeber (15) und Schwingungsaufnehmer (16) sich gemeinsam nebeneinander auf einem beweglichen Hebelarm (17) über der Prüflingsmitte befinden.

## Claims

1. An apparatus for testing the purity of noble metal mouldings, more especially noble metal bars and noble metal discs, by imparting transverse vibrations to the noble metal moulding using a vibration generator and measuring the resonance frequency by means of a vibration pickup, characterized in that the vibration generator (10) and the vibration pickup (11) are formed by piezoelectric transducers and are directly coupled to the moulding (1) to be tested and in that one or more supports (2) are present for the moulding (1) to be tested.

2. An apparatus as claimed in claim 1, characterized in that the support (2) is formed by a horizontal flat plate consisting of an elastic-material.

3. An apparatus for testing the purity of bars as claimed in claim 1, characterized in that the supports are formed by two edges which can be varied in their position symmetrically to the centre of the moulding (1) to be tested by means of a spindle (5), in that for centring the moulding (1) to be tested two stops (3, 4) are likewise fixed to a spindle (6), a vibration generator (10) being arranged on one (4) of the stops, and in that the vibration pickup (11) is situated on a movable lever arm (12) over the centre of the moulding to be tested.

4. An apparatus for testing the purity of discs as claimed in claim 1, characterized in that the supports consist of three radially displaceable cones (14) and in that the vibration generator (15) and vibration pickup (16) are situated adjacent one another on a moveable lever arm (17) over the centre of the moulding to be tested.

## Revendications

1. Dispositif pour le contrôle de l'authenticité de corps moulés en métaux précieux, en particulier de lingots de métaux précieux et de pièces rondes de métaux précieux, par excitation du corps moulé en métal précieux avec des oscillations transversales par l'intermédiaire d'un générateur d'oscillations, et mesure de la fréquence de résonance à l'aide d'un capteur d'oscillations, dispositif caractérisé en ce qu'un générateur d'oscillations (10) et un capteur d'oscillations (11) ont la configuration de transducteurs piézo-électriques et sont directement couplés au corps à contrôler (1), et un ou plusieurs supports (2) sont présents pour le corps à contrôler.

2. Dispositif pour le contrôle de l'authenticité selon la revendication 1, caractérisé en ce que le support (1) se présente sous forme d'une plaque plane horizontale, constituée d'un matériau élastique.

3. Dispositif pour le contrôle de l'authenticité de lingots selon la revendication 1, caractérisé en ce que les supports (2) sont représentés sous forme de deux couteaux dont la longueur peut être modifiée symétriquement par rapport au milieu de l'objet à contrôler (1), au moyen d'une tige filetée (5), deux butées (3, 4) sont également fixées à une tige filetée (6) pour le centrage de l'objet à contrôler (1), un générateur d'oscillations (10) est placé sur l'une des butées (4), et le générateur d'oscillations (11), fixé à un arbre de levier mobile (12) se trouve au-dessus du centre de l'objet à contrôler.

4. Dispositif pour le contrôle de l'authenticité de pièces rondes selon la revendication 1, caractérisé en ce que les supports, constitués de trois cônes (14) pouvant être déplacés radialement, et générateur d'oscillations (15) et capteur d'oscillations (16) se trouvent ensemble l'un à côté de l'autre sur un bras de levier mobile (17), au-dessus du centre de l'objet à contrôler.

FIG. I

Fig. II

0 113 031

Fig. III

0 113 031

Fig. IV